# FASCICULE DE BREVET EUROPEEN

(11) **EP 1 646 562 B1**
(45) Date de publication et mention de la délivrance du brevet: **09.09.2009**
(21) Numéro de dépôt: 04767600.2
(22) Date de dépôt: 07.07.2004
(51) Int. Cl.: B64D 25/00, A62B 99/00

(54) **NACELLE A VERROUILLAGE DE BRAS DEPLOYABLES**
KORB MIT VERRIEGELBAREN, ENTFALTBAREN ARMEN
POD WITH LOCKABLE, EXTENDABLE ARMS

(30) Priorité: 09.07.2003 FR 0308402
(43) Date de publication de la demande: 19.04.2006
(73) Titulaire: Tardy, Jean-François, 92400 Courbevoie (FR)
(72) Inventeur: Tardy, Jean-François, 92400 Courbevoie (FR)
(74) Mandataire: Hirsch & Associés
(86) Numéro de dépôt international: PCT/FR2004/001765
(87) Numéro de publication internationale: WO 2005/005253

(56) Documents cités:
- WO-A-00/07877
- FR-A- 678 566
- US-A- 3 467 346
- US-A- 3 476 339

## Description

L'invention concerne une nacelle comportant un mât, de suspension à un filin, portant des bras déployables à l'horizontale pour l'évacuation d'urgence de personnes. WO-A-00/07877 divulgue une nacelle selon le préambule de la revendication 1.

Le problème à l'origine de l'invention, mais qui ne doit pas limiter la portée de la présente demande, concernait une nacelle suspendue au bout d'un câble sous un hélicoptère pour permettre à des personnes en danger de s'y réfugier pour être rapidement évacuées, par exemple en cas d'inondations ou encore de troubles. La nacelle présente une forme globale de parapluie retourné qui doit rester reployé pendant son transport dans l'hélicoptère, pour une raison de volume disponible, et pendant sa descente, pour éviter que le vent ne la déporte. Les branches sont maintenues rabattues contre le mât central par un mécanisme comprenant une bague curseur massive de déploiement des bras, accrochée au mât par un mécanisme à ressorts poussant radialement des calottes de billes dans une rainure circulaire du mât. Lorsque le déroulement du câble est arrêté brusquement, la bague massive exerce une force axiale, dépassant le seuil des ressorts et arrachant donc les billes hors de la rainure, si bien que la bague coulisse et commande le déploiement des bras.

Un tel mécanisme fonctionne certes correctement. Toutefois, la présente invention ne prévoit pas la nécessité d'une bague curseur de commande de déploiement des bras, c'est-à-dire que les bras peuvent n'être que pivotants, sans nécessairement être déployés par un mécanisme coulissant.

La présente invention vise donc à proposer une autre solution de verrouillage amovible des bras en position reployée.

A cet effet, l'invention concerne une nacelle d'évacuation de personnes, comprenant un mât central dont un tronçon support porte des extrémités de bras montés pivotants pour que des tronçons libres opposés respectifs soient, en position reployée sensiblement axiale par rapport à un axe du mât, maintenus par un dispositif de verrouillage amovible, caractérisée par le fait que le dispositif de verrouillage comporte une couronne axialement mobile disposée à distance axiale du tronçon support, pour maintenir radialement les bras sous emprise de verrouillage, la couronne étant maintenue en position de verrouillage par un effet d'hystérésis dans lequel la couronne ne peut être entraînée, par détente d'un ressort armé dont une extrémité occupe une position de contre-appui axialement fixe par rapport au mât, dans une course de recul hors de son emprise, qu'après armement supplémentaire du ressort par une force externe afin de libérer une butée mobile, d'inhibition de l'action du ressort, maintenue en équilibre précaire de butée anti-recul par la couronne.

Ainsi, un appui manuel sur la couronne permet le déploiement des bras. La force de cet appui doit dépasser un seuil, correspondant à la force du ressort à l'état armé.

Les termes « tronçons libres » désignent toute partie des bras autre que l'extrémité de pivotement, qui est axialement fixe, c'est-à-dire désignent tout tronçon du reste des bras qui est apte au mouvement de déploiement et dont le blocage radial verrouille le bras en position reployée. En effet, comme expliqué plus loin, les bras peuvent être libérés par un simple coulissement axial de la couronne hors de la plage axiale qu'ils occupent selon l'axe du mât, et alors ce sont leurs extrémités libres qui sont de préférence sous emprise, ou bien libérés par un coulissement avec rotation de la couronne entraînant une libération latérale, et non plus axiale, des bras par recul en rotation de pattes ou crocs de verrouillage disposés en pourtour de la couronne.

On notera, comme évoqué ou explicité ci-dessous, que, du fait que le dispositif nécessite deux contre-appuis axiaux, pour respectivement le ressort et la butée opposée, ces contre-appuis peuvent être fournis par des reliefs latéraux du mât et/ou d'un ou plusieurs bras, puisque les bras reployés constituent chacun l'équivalent d'un mât de position axiale fixe par rapport au mât central. En d'autres termes, le ressort et/ou la butée peuvent prendre chacun, indépendamment l'un de l'autre, un contre-appui axial sur un relief latéral du mât ou sur un relief latéral d'un bras quelconque. Ainsi, lorsque les deux contre-appuis s'exercent sur un même ou sur deux bras, le mât peut être limité à son seul tronçon d'articulation des bras, ces derniers coopérant exclusivement entre eux pour se verrouiller en position reployée.

En position fonctionnelle suspendue de la nacelle, les bras peuvent être reployés vers le haut, pour pouvoir se déployer par gravité, ou reployés vers le bas, avec alors, de préférence, des ressorts de rappel pour les faire remonter en position déployée et des moyens de verrouillage de chaque bras en position déployée. Si c'est la position reployée vers le bas qui est prévue, on notera que, comme exposé ci-dessus, le mât ne comportera de préférence que le tronçon support en rotation des bras, afin de permettre de poser finalement au sol les bras déployés.

La couronne peut donc être montée coulissante, de façon ajustée ou non selon le mécanisme particulier de réalisation du dispositif, sur un tronçon opposé du mât ou sur un tronçon de l'un, particulier, des bras. Dans ce dernier cas, le ressort peut être agencé pour que son contre-appui s'exerce sur un relief latéral du bras particulier, bien qu'un contre-appui sur un autre bras ou sur le mât ne soit pas à exclure.

De même, la butée peut être agencée pour prendre un contre-appui sur un relief latéral de l'un des bras.

Pour faciliter la libération de la couronne, il est de préférence prévu des moyens d'entraînement de la butée hors de sa position d'équilibre précaire, par exemple un ressort de rappel de la butée hors de sa position d'équilibre précaire, ou encore un lien fixé à la couronne, c'est-à-dire tirant sur la butée et la déséquilibrant lorsque la couronne s'écarte de la butée sous l'effet de la force externe.

En variante, les moyens d'entraînement de la butée peuvent comporter une rampe de la couronne, à extension partiellement radiale par rapport au mât, en prise avec une rampe opposée de la butée, pour repousser radialement la butée hors de sa position d'équilibre précaire, lorsque la couronne s'écarte de la butée lors de l'armement supplémentaire du ressort.

La couronne comporte ainsi une sorte de rostre courbé en C, ou L ouvert en rampe, dont une extrémité est en prise avec la butée, de même forme mais retournée, pour ainsi repousser latéralement cette dernière lorsque la couronne s'en écarte.

La couronne peut comporter un relief axial de maintien en équilibre précaire de la butée, par exemple une nervure ou une rainure formant un épaulement.

Pour éviter de la perdre et pour mieux contrôler son mouvement, la butée peut être montée mobile sur le mât ou bien sur la couronne, en translation ou en pivotement.

Dans ce dernier cas, la butée est de préférence associée à un. élément de limitation de pivotement définissant la position d'équilibre précaire. Ce peut être un élément de limitation de rotation situé au niveau de l'articulation de la butée, ou bien un élément coopérant avec son extrémité libre et appartenant à la couronne ou bien au mât.

Ce peut aussi être une autre butée, c'est-à-dire que la butée présente alors une course coupant, dans la position d'équilibre précaire, celle d'une autre butée constituant l'élément de limitation de pivotement.

Les deux butées ou plus peuvent ainsi s'arc-bouter l'une sur l'autre en formant un triangle ou faisceau. L'autre butée sert donc à étayer la butée d'inhibition du ressort, et elle sert éventuellement aussi de butée d'inhibition du ressort, les deux butées ayant alors par exemple la même forme. On notera toutefois que les deux butées peuvent présenter, pour la couronne, deux points de butée respectifs distants, c'est-à-dire différents de leur point de butée mutuelle. C'est par exemple le cas de butées en C articulés par une extrémité et venant en appui mutuel dos à dos.

La butée peut être montée élastiquement pivotante autour d'un axe sensiblement parallèle à une direction de coulissement de la couronne pour être rappelée, hors de la position d'équilibre précaire, dans un secteur angulaire lui offrant un passage axial libre.

La butée peut fonctionner en compression, c'est-à-dire être disposée du côté de la course de la couronne, à l'opposé du tronçon support des bras, ou bien être disposée du côté du tronçon support des bras pour travailler à la traction, et elle comporte alors un croc de retenue présentant une surface interne de butée coopérant avec un relief de retenue de la couronne, par exemple une cavité à section en forme de croc, ouverte radialement ou à l'opposé du tronçon support des bras.

Il n'est pas nécessaire que la butée, une fois déséquilibrée, vienne occuper une position en dehors de la course de la couronne. En effet, la butée peut présenter une forme de came agencée pour, hors de la position d'équilibre précaire, être chassée par la couronne hors de la course de recul de celle-ci.

De préférence, pour éviter des contraintes de vrillage, il est prévu une pluralité de butées équiréparties autour du mât.

Pour une ouverture automatique des bras, la couronne peut présenter une masse déterminée pour exercer l'armement supplémentaire du ressort en cas de dépassement d'un seuil de décélération.

Une décélération brusque du dispositif dans le sens axial voulu, par exemple par arrêt brusque du dévidement d'un filin de suspension, arme temporairement encore plus le ressort pour ainsi libérer la butée opposée à son action et donc permettre au ressort de faire reculer la couronne pour libérer les bras.

Tout comme la butée, et indépendamment de la forme de réalisation de celle-ci, le ressort peut travailler à la compression ou à la traction.

Du fait qu'il s'agit de maintenir un nombre discret de bras, la couronne peut être constituée par une bague, servant au guidage en coulissement, portant des crocs ou pattes de maintien des tronçons libres des bras respectifs.

En pareil cas, le mât peut être fileté sur un tronçon de course de recul de la couronne coopérant avec un taraudage de celle-ci, pour, dans la course de recul, décaler angulairement des secteurs d'emprise des pattes par rapport à des secteurs fixes occupés par les tronçons libres des bras.

On notera qu'alors la libération des bras s'effectue latéralement à ceux-ci et non pas en bout comme dans le cas d'un simple coulissement, c'est-à-dire que la couronne ne doit pas nécessairement coulisser au-delà de l'extrémité libre des bras, car elle peut rester, en position de déverrouillage, axialement au niveau des bras.

De préférence, la couronne est agencée pour coopérer avec un mécanisme de sécurité prévu pour la maintenir en position de verrouillage des bras.

A cet effet, le mât peut présenter une section transversale non circulaire ajustée à une hampe de coulissement axial de la couronne pour indexer angulairement la couronne, le mât présentant, au niveau de la position de la couronne verrouillant les bras, un tronçon à section transversale non ajustée délimitant un passage latéral circonférentiel accessible à la hampe par rotation de la couronne par un opérateur et présentant deux épaulements axialement opposés de maintien de la couronne en position axiale de verrouillage des bras.

Encore à cet effet, en variante, la couronne appartient à une tête du mât comportant un curseur du mécanisme de sécurité, mobile dans un plan radial du mât pour coopérer avec au moins un épaulement en regard de la couronne afin de bloquer axialement la couronne dans au moins un sens de coulissement.

L'invention sera mieux comprise à l'aide de la description suivante d'une forme de réalisation d'une nacelle à dispositif de verrouillage amovible selon l'invention, en référence au dessin annexé, sur lequel :
- la figure 1 est une vue latérale d'une nacelle de sauvetage en position reployée, comportant un dispositif de verrouillage, selon l'invention,
- la figure 2 est une vue latérale de la nacelle en position déployée,
- la figure 3 est une vue de dessus de la nacelle, et
- la figure 4 est une vue latérale agrandie du dispositif de verrouillage.

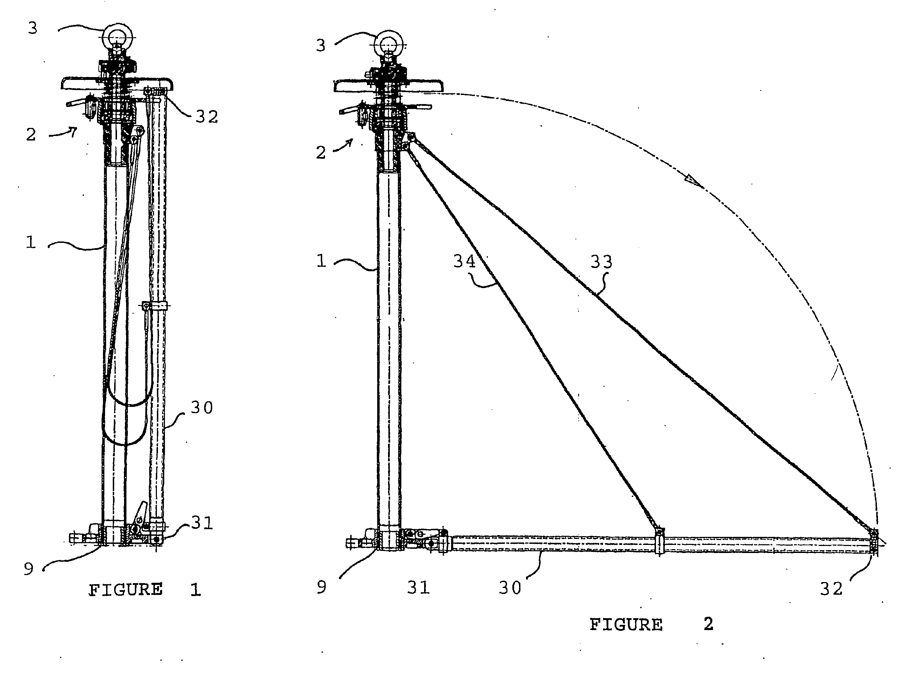

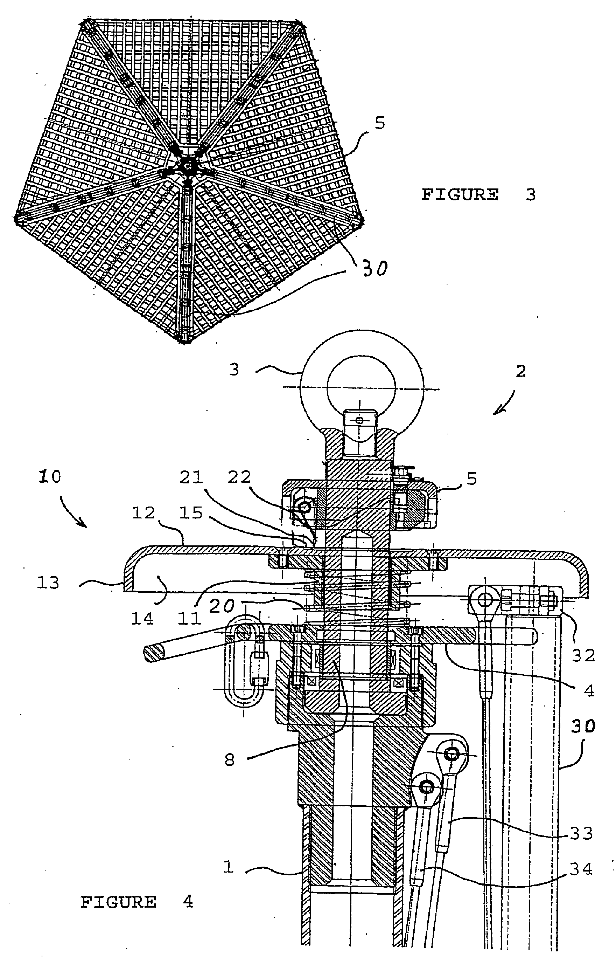

La nacelle de sauvetage représentée est destinée à évacuer rapidement des personnes en danger. Comme le montrent les figures 1 et 2, la nacelle est classiquement transportée reployée, selon la figure 1, dans un hélicoptère et elle est larguée fixée à un filin par un anneau 3 solidaire d'une tête 2 d'un mât d'axe central 1, vertical en position fonctionnelle. La nacelle comporte une pluralité d'ici cinq bras 30 identiques, dont un seul, dans un but de clarté, est dessiné sur les figures 1 et 2, tous étant visibles sur la figure 3. Chaque bras 30 est articulé par une extrémité 31 à un talon 9 du mât 1 de façon à pouvoir chacun pivoter dans un plan, axial au mât 1, et radial dans une direction spécifique, précisément ici dans des directions radiales équiréparties, donc écartées de 72 degrés. Le talon 9 est une sorte de bague enfilée sur le mât 1 et axialement fixe dans cet exemple.

Pour la facilité de l'exposé, la nacelle est dessinée dans son orientation fonctionnelle, verticale. Les explications sont bien évidemment transposables pour une autre orientation.

Chaque bras 30 peut ainsi se déployer sous l'effet de la gravité, et éventuellement de ressorts, non dessinés, situés par exemple au niveau des articulations des extrémités 31.

La tête 2 est reliée à une extrémité de tronçon libre 32 du bras 30 par un hauban externe 33 et à un point intermédiaire du bras 30 par un hauban interne 34, pour que le bras 30 s'étende parfaitement radialement à l'horizontale en position déployée. Le quart de cercle en pointillés orienté de la figure 2 illustre le trajet de déploiement d'un tronçon libre 32.

Comme le montre la figure 3, un treillis résistant 5, de réception des personnes, est porté par les bras 30.

La figure 4 représente plus en détails la tête 2, comportant le dispositif de verrouillage des bras 30. le dispositif de verrouillage comporte une couronne 10, ici en position de verrouillage des bras 30, montée coulissante en va et vient sur le mât 1 par solidarisation avec une bague ou hampe de guidage en coulissement 11 ajustée au diamètre du mât 1. La couronne 10 est ici en forme de champignon, avec la hampe de guidage 11 sous forme de tronçon cylindrique monté coulissant sur une tige 8 prolongeant le mât 1 dans la tête 2, la hampe 11 se poursuivant par une coupelle renversée formée par une partie centrale 12 sensiblement en disque radial et un rebord externe 13 retombant vers le talon 9. Le mât 1 et la tige 8 sont ici de section transversale circulaire. Toutefois, en variante, la hampe 11 peut comporter un ou plusieurs curseurs globalement en queue d'aronde introduits dans une ou plusieurs rainures longitudinales respectives à bords resserrés de la tige 8.

Un volume 14, radialement interne au rebord 13, reçoit les tronçons libres 32 des bras 30 en position reployée, avec toutefois une marge de jeu axial d'ici quelques millimètres par rapport à la face inférieure du disque 12. Le rebord 13 présente ainsi radialement une emprise sur une certaine longueur axiale pour verrouiller les bras 30 en position reployée tant que son bord libre est situé à un niveau inférieur au sommet des extrémités des tronçons libres 32 des bras 30.

La couronne 10 est rappelée vers le haut, 1 donc à l'opposé du talon 9 et des bras 30, par un ressort de rappel 20, ici hélicoidal et enroulé de façon axée sur la tige 8. Le ressort de rappel 20, travaillant ici par détente à partir d'un état armé comprimé, prend appui sur une bague inférieure 4, axialement fixe, de la tête 2 pour repousser la couronne 10 vers le haut par appui sur un épaulement radial de la hampe de guidage en coulissement 11 tourné vers le bas.

Une partie haute de la tête 2, au-dessus de la couronne 10, comporte un montage globalement en forme de bague, de position axiale fixe opposée à la bague 4. A partir de sa position de verrouillage représentée, la couronne 10 peut, comme indiqué, coulisser axialement dans les deux sens entre les bagues 4 et 5, grâce respectivement au jeu vis-à-vis des extrémités des tronçons libres 32 des bras 30 et à un jeu de course de recul vers le haut, correspondant au moins à la longueur axiale du tronçon d'extrémité emprisonné 32 des bras 30.

Toutefois, une butée amovible 21, coincée dans une position d'équilibre précaire entre la bague supérieure 5 et la couronne 10, empêche la remontée de celle-ci sous l'effet du ressort 20. La butée 21 est ici une sorte de doigt monté pivotant sous la bague 5 pour occuper une position d'extension axiale située dans le volume de course de recul ascendant de la couronne 10, pour ainsi faire fonction d'entretoise d'inhibition de l'action du ressort 20. Dans cet exemple, un ressort de rappel 22, ici de forme filaire, tend à ramener la butée 21 dans une position au moins inclinée sur l'axe du mât 1, pour que le disque central 12 la repousse totalement en rotation vers le haut sous l'effet du ressort central 20.

La butée 21 joue alors une fonction de came repoussée en rotation par le disque radial 12 en glissant sur celui-ci, ici radialement vers l'extérieur, du fait que la butée 21 y bute alors en oblique. De préférence toutefois, comme ici, le ressort filaire 22 ramène par lui-même la butée 21 dans une position désarmée sensiblement radiale hors du volume, de course de recul vers le haut de la couronne 10, nécessaire pour libérer les bras 30.

La butée 21 est ici maintenue en position fonctionnelle axiale d'équilibre précaire par un épaulement 15, tourné vers l'axe du mât 1 et de hauteur axiale limitée, limitant dans cet exemple une cavité centrale de la face supérieure du disque 12.

En variante, la butée 21 pourrait occuper une position précaire oblique, en appui sur le bord de la tige 8, c'est-à-dire atteinte par un trajet circulaire d'armement dans un plan radial de la tige 8, depuis la position désarmée sensiblement radiale, trajet d'armement dans lequel le déplacement de l'extrémité libre de la butée 21 présente une composante de rapprochement axial vers la couronne 10, puis une composante opposée, d'éloignement axial en remontée après passage dans la position basse d'extension purement axiale de la figure 4. De ce fait, le disque 12 peut alors être parfaitement plan, c'est-à-dire exempt de l'épaulement 15, puisque la libération de la butée 21 nécessite, dans cette variante, un recul vers le bas de la couronne 10, alors que le ressort principal 20 s'y oppose en présentant une force, de rappel vers le haut, supérieure à la composante axiale descendante de la force exercée par le ressort 22 de rappel de la butée 21.

Le fonctionnement du dispositif va maintenant être expliqué plus en détails.

Pour déverrouiller les bras 30, la couronne 10 doit d'abord être enfoncée vers ceux-ci pour libérer l'extrémité libre de la butée 21, afin qu'elle soit à distance axiale du haut de l'épaulement 15, c'est-à-dire hors de la cavité correspondante. Le ressort filaire 22 peut alors ramener la butée 21 en position rabattue, sensiblement radiale, hors de la course de recul ascendant voulue pour la couronne 10. L'inhibition de l'action du ressort principal central 20 étant ainsi supprimée, celui-ci repousse vers le haut la couronne 10, ce qui permet aux bras 30 de se déployer par gravité ou à l'aide de ressorts.

L'enfoncement en coulissement axial de la couronne 10 s'effectue manuellement ou par un effet d'inertie, en prévoyant que la couronne 10 ait une masse suffisante pour écraser temporairement, c'est-à-dire armer un peu plus, le ressort principal 20, en cas de décélération axiale sous l'effet d'un arrêt brusque de la descente du filin de suspension.

En variante, l'effacement de la butée (21) peut s'effectuer par rotation autour d'un axe sensiblement parallèle à celui du mât 1, pour que le ressort associé 22 la rappelle dans un secteur angulaire de repos correspondant à une échancrure ou un passage ménagé axialement dans le disque 12. La butée (21) peut ainsi par exemple être un doigt élastique fiché latéralement dans la tige 8, l'extrémité libre étant inclinée vers le disque 12. Pour la mettre en position d'équilibre précaire, la butée (21) est alors repoussée angulairement par un opérateur pour placer axialement son extrémité libre, pivotant dans un plan sensiblement purement radial du mât 1, en regard d'une cavité du disque 12, alors reculé contre l'action du ressort 20, la cavité présentant un épaulement semblable à l'épaulement 15 mais à extension radiale. Le relâchement de la couronne 10 par l'opérateur provoque l'emprisonnement latéral de l'extrémité libre de la butée (21) dans la cavité axialement en regard, et donc le maintien en butée en position d'inhibition de l'action du ressort 20. Un appui axial descendant sur la couronne 10 libère la butée (21) qui revient élastiquement dans son secteur angulaire de repos, pour lequel la butée (21) dispose d'un passage axial totalement libre à travers la couronne 10.

De façon duale, la butée (21) peut être montée pivotante sur la couronne 10 pour former une béquille butant en équilibre précaire au fond d'une cavité de la tête 2, cavité par exemple directement taillée latéralement dans la tige 8. Lorsqu'elle sort de cette cavité interne à la section de la tige 8, l'extrémité libre de la butée (21) peut alors glisser axialement contre ou à distance de la surface latérale de la tige 8, le passage ci-dessus étant alors constitué par le volume externe à la tige 8.

Il peut en outre être prévu un mécanisme de sécurité pour empêcher un déverrouillage inopiné. Le mécanisme de sécurité vise à bloquer la translation axiale de la couronne 10, ce qui peut être effectué par un blocage de toute translation vers le haut, ou par un même blocage vers le bas pour empêcher la libération de la butée 21, ou, mieux, par un blocage axial total, donc sans, respectivement, risque de libération non détectée de la butée 21 ou risque de défaillance en stockage du mécanisme de butée 21.

Le mécanisme de sécurité peut consister en un doigt rigide prévu pour venir s'insérer entre deux épaulements axialement en regard le bloquant en translation axiale. Le doigt et les deux épaulements sont solidaires d'un élément support respectif quelconque du groupe de supports constitué par le mât 1 / tige 8 et de la couronne 10. Le doigt ou les deux épaulements est/sont monté(s) mobile(s) en translation ou de préférence en rotation dans un plan sensiblement radial à l'axe du mât 1 pour venir en prise mutuelle de position de verrouillage de sécurité de la couronne 10 et pour se dégager mutuellement afin de libérer axialement la couronne 10.

Ainsi, par exemple, la surface radiale de l'extrémité inférieure de la hampe de coulissement 11 peut porter un tel doigt rotatif venant se loger dans une cavité de la tige 8 formant les deux épaulements ci-dessus. De façon duale, la tige 8 peut comporter un doigt déployable venant se loger dans une fente de la hampe de coulissement 11.

Il peut encore être prévu que le mât 1, plus précisément la tige 8, soit de forme autre que parfaitement circulaire, afin que la hampe de coulissement 11 ne puisse coulisser que lorsque la couronne 10 occupe une position angulaire particulière par rapport à la tige 8.

En pareil cas, la tige 8 et le passage interne correspondant de la hampe de coulissement 11 étant par exemple de section transversale ovale, la tige 8 peut présenter, au niveau de la position de repos de la couronne 10 sur la figure 4, une section circulaire permettant une rotation de la couronne 10. La hampe de coulissement 11 se trouve ainsi bloquée axialement en cas de rotation de la couronne 10 hors de sa position angulaire indexée. Le maintien de la couronne 10 en position de sécurité, décalée angulairement, peut être assuré par une goupille amovible, par frottement, ou encore par coopération élastique de deux reliefs opposés, par exemple une bille dont une calotte est plaquée par un ressort dans une cavité opposée.

En variante, la tête 2 comporte un curseur à extension selon un secteur circonférentiel, rotatif selon l'axe de la tige 8, agencé pour venir se loger dans une rainure circonférentielle de la couronne 10, et ainsi la verrouiller en position axiale de repos. La couronne 10 est en pareil cas montée bloquée en rotation par rapport à la tige 8, c'est-à-dire angulairement indexée par adaptation de forme.

D'une façon générale, on notera que l'exposé technique de la présente demande n'est pas limité au problème à l'origine de l'invention, une nacelle, mais s'applique à tout mécanisme du type d'un parapluie, quelle que soit l'application visée.

## Revendications

1. Nacelle d'évacuation de personnes, comprenant un mât central (1, 8) dont un tronçon support (9) porte des extrémités (31) de bras (30) montés pivotants pour que des tronçons libres opposés respectifs (32) soient, en position reployée sensiblement axiale par rapport à un axe du mât (1, 8), maintenus' par un dispositif de verrouillage amovible, **caractérisée par le fait que** le dispositif de verrouillage comporte une couronne (10) axialement mobile disposée à distance axiale du tronçon support (9), pour maintenir radialement les bras (30) sous emprise de verrouillage, la couronne (10) étant maintenue en position de verrouillage par un effet d'hystérésis dans lequel la couronne (10) ne peut être entraînée, par détente d'un ressort (20) armé dont une extrémité occupe une position de contre-appui axialement fixe par rapport au mât (1, 8), dans une course de recul hors de son emprise, qu'après armement supplémentaire du ressort (20) par une force externe afin de libérer une butée mobile (21), d'inhibition de l'action du ressort (20), maintenue en équilibre précaire de butée anti-recul par la couronne (10).

2. Nacelle selon la revendication 1, dans laquelle la couronne (10) est montée coulissante sur un tronçon opposé (2) du mât (1, 8).

3. Nacelle selon la revendication 1, dans laquelle la couronne (10) est montée coulissante sur un tronçon de l'un, particulier, des bras (30).

4. Nacelle selon la revendication 3, dans laquelle le ressort (20) est agencé pour que son contre-appui s'exerce sur un relief latéral du bras particulier.

5. Nacelle selon l'une des revendications 1 à 4, dans laquelle la butée (21) est agencée pour prendre un contre-appui sur un relief latéral de l'un des bras (30).

6. Nacelle selon la revendications 1 à 5, dans laquelle il est prévu des moyens (22) d'entraînement de la butée (20) hors de sa position d'équilibre précaire.

7. Nacelle selon la revendication 6, dans laquelle les moyens d'entraînement de la butée (21) comportent un ressort de rappel (22).

8. Nacelle selon la revendication 6, dans laquelle les moyens d'entraînement de la butée (21) comportent un lien fixé à la couronne (10).

9. Nacelle selon la revendication 6, dans laquelle les moyens d'entraînement de la butée (21) comportent une rampe de la couronne (10), à extension partiellement radiale par rapport au mât (1, 8), en prise avec une rampe opposée de la butée (21), pour repousser radialement la butée (21) hors de sa position d'équilibre précaire, lorsque la couronne (10) s'écarte de la butée (21) lors de l'armement supplémentaire du ressort (20).

10. Nacelle selon l'une des revendications 1 à 9, dans laquelle la couronne (10) comporte un relief axial (15) de maintien en équilibre précaire de la butée (21).

11. Nacelle selon l'une des revendications 1 à 10, dans laquelle la butée (21) est montée mobile sur le mât (1, 8).

12. Nacelle selon l'une des revendications 1 à 10, dans laquelle la butée (21) est montée mobile sur la couronne (10).

13. Nacelle selon l'une des revendications 1 à 12, dans laquelle la butée (21) est montée pivotante.

14. Nacelle selon la revendication 13, dans laquelle la butée (21) est montée élastiquement pivotante autour d'un axe sensiblement parallèle à une direction de coulissement de la couronne (10) pour être rappelée, hors de la position d'équilibre précaire, dans un secteur angulaire lui offrant un passage axial libre.

15. Nacelle selon l'une des revendications 13 et 14,
dans laquelle la butée (21) est associée à un élément de limitation de pivotement définissant la position d'équilibre précaire.

16. Nacelle selon la revendication 15, dans laquelle la butée présente une course coupant, dans la position d'équilibre précaire, celle d'une autre butée constituant l'élément de limitation de pivotement.

17. Nacelle selon l'une des revendications 1 à 16,
dans laquelle la butée (21) comporte un croc présentant une surface interne de butée coopérant avec un relief de retenue de la couronne (10).

18. Nacelle selon l'une des revendications 1 à 17,
dans laquelle la butée (21) présente une forme de came agencée pour, hors de la position d'équilibre précaire, être chassée par la couronne (10) hors de la course de recul de celle-ci.

19. Nacelle selon l'une des revendications 1 à 18,
dans laquelle la couronne (10) présente une masse déterminée pour exercer l'armement supplémentaire du ressort (20) en cas de dépassement d'un seuil de décélération.

20. Nacelle selon l'une des revendications 1 à 19,
dans laquelle la couronne (10) est constituée par une bague (11) portant des pattes de maintien des tronçons libres (32) des bras respectifs.

21. Nacelle selon la revendication 20, dans laquelle le mât (1, 8) est fileté sur un tronçon de course de recul de la couronne (10) coopérant avec un taraudage de celle-ci, pour, dans la course de recul, décaler angulairement des secteurs d'emprise des pattes par rapport à des secteurs fixes occupés par les tronçons libres (32) des bras (30).

22. Nacelle selon l'une des revendications 1 à 21,
dans laquelle la couronne (10) est agencée pour coopérer avec un mécanisme de sécurité prévu pour la maintenir en position de verrouillage des bras (30).

23. Nacelle selon la revendication 22, dans laquelle le mât (1, 8) présente une section transversale non circulaire ajustée à une hampe (11) de coulissement axial de la couronne (10) pour indexer angulairement la couronne (10), le mât (1, 8) présentant, au niveau de la position de la couronne (10) verrouillant les bras (30), un tronçon à section transversale non ajustée délimitant un passage latéral circonférentiel accessible à la hampe (11) par rotation de la couronne (10) par un opérateur et présentant deux épaulements axialement opposés de maintien de la couronne (10) en position axiale de verrouillage des bras (30).

24. Nacelle selon la revendication 22, dans laquelle la couronne (10) appartient à une tête (2) du mât (1,8) comportant un curseur du mécanisme de sécurité, mobile dans un plan radial du mât (1, 8) pour coopérer avec au moins un épaulement en regard de la couronne (10) afin de bloquer axialement la couronne (10) dans au moins un sens de coulissement.

## Claims

1. Pod for evacuating persons, including a central mast (1, 8), a support section (9) of which bears ends (31) of arms (30) pivotally mounted so that respective opposed free sections (32) are, in a folded back position substantially axial in relation to an axis of the mast (1, 8), maintained by a removable locking device, **characterized in that** the locking device comprises an axially movable crown member (10) disposed at an axial distance from the support section (9), to radially maintain the arms (30) locked, the crown member (10) being held in a locking position, through a hysteresis effect, in which the crown member (10) can be driven, through the expansion of a loaded spring (20), one end of which occupies a counter-pressure position axially fixed in relation to the mast (1, 8), in a movement of recoil from its locking position, only after an additional loading of the spring (20) by an external force in order to release a mobile stop (21) arranged for inhibiting the action of the spring (20) and held in a precarious anti-recoil stop equilibrium by the crown member (10).

2. Pod according to claim 1, in which the crown member (10) is mounted for sliding on an opposed section (2) of the mast (1, 8).

3. Pod according to claim 1, in which the crown member (10) is mounted for sliding on a section of a particular one of the arms (30).

4. Pod according to claim 3, in which the spring (20) is arranged so that its counter-pressure is exerted on a lateral relief portion of the particular arm.

5. Pod according to one of claims I to 4, in which the stop (21) is arranged to take counter-support on a lateral relief portion of one of the arms (30).

6. Pod according to one of claims 1 to 5, in which there are provided means (22) for driving the stop (20) out of its position of precarious equilibrium.

7. Pod according to claim 6, in which the means for driving the stop (21) comprise a return spring (22).

8. Pod according to claim 6, in which the means for driving the stop (21) comprise a link fixed to the crown member (10).

9. Pod according to claim 6, in which the means for driving the stop (21) comprise a ramp of the crown member ( 10 ), partially extending radially in relation to the mast (1, 8), engaging with an opposed ramp on the stop (21), to radially push back the stop (21) out of its position of precarious equilibrium, when the crown member (10) moves away from the stop (21) when the spring (20) is additionally loaded.

10. Pod according to one of claims 1 to 9, in which the crown member (10) comprises an axial relief portion (15) for maintaining the stop (21) in precarious equilibrium.

11. Pod according to one of claims 1 to 10, in which the stop (21) is mounted so as to be movable on the mast (1, 8).

12. Pod according to one of claims 1 to 10, in which the stop (21) is mounted so as to be movable on the crown member (10).

13. Pod according to one of claims I to 12, in which the stop (21) is mounted pivotally.

14. Pod according to claim 13, in which the stop member (21) is mounted so as to pivot elastically about an axis substantially parallel to a sliding direction of the crown member (10) so as to be drawn back, out of a position of precarious equilibrium, into an angular sector affording it free axial passage.

15. Pod according to one of claims 13 and 14, in which the stop (21) is associated with a rotation limiting member defining the position of precarious equilibrium.

16. Pod according to claim 15, in which the stop (21) has a travel intersecting, in the position of precarious equilibrium, that of another stop forming the rotation limiting member.

17. Pod according to one of claims 1 to 16, in which the stop (21) comprises a hook having an inner abutment surface cooperating with a relief portion for retaining the crown member (10).

18. Pod according to one of claims 1 to 17, in which the stop (21) has the shape of a cam arranged for, when located outside the position of precarious equilibrium, being driven by the crown member (10) out of the recoil travel of the latter.

19. Pod according to one of claims 1 to 18, in which the crown member (10) has a determined mass to perform the additional loading of the spring (20) in the event of a threshold of deceleration being exceeded.

20. Pod according to one of claims 1 to 19, in which the crown member (10) is formed by a ring (11) bearing tabs for holding the free sections (32) of the respective arms.

21. Pod according to claim 20, in which the mast (1, 8) is externally threaded over a recoil travel path section on which the crown member (10) recoils, said externally threaded section cooperating with an internal thread of the crown member (10) so as to angularly offset, in the recoil travel movement, gripping sectors of the tabs in relation to fixed sectors occupied by the free sections (32) of the arms (30).

22. Pod according to one of claims 1 to 21, in which the crown member (10) is arranged to cooperate with a safety mechanism provided for holding it in the position for locking the arms (30).

23. Pod according to claim 22, in which the mast (1, 8) has a non-circular cross-section fitted to a shape corresponding sliding member (11) for an axial sliding of the crown member (10) to angularly index the crown member (10), with the mast (1, 8) having, in the area of the position of the crown member (10) locking the arms (30), a section with a non-fitted cross-section delimiting a circumferential lateral passage accessible to the sliding member (11) through a rotation of the crown member (10) by an operator and having two axially opposed shoulders for holding the crown member (10) in the axial arm (30) locking position.

24. Pod according to claim 22, in which the crown member (10) belongs to a head (2) of the mast (1, 8) comprising a slide means of the safety mechanism, movable in a radial plane of the mast (1, 8) to cooperate with at least one shoulder facing the crown member (10) in order to axially block the crown member (10) in at least one sliding direction.

## Patentansprüche

1. Gondel zum Evakuieren von Personen, die einen zentralen Mast (1, 8) aufweist, von dem ein Tragabschnitt (9) Enden (31) von Armen (30) trägt, die schwenkend installiert sind, damit jeweilige freie entgegen gesetzte Abschnitte (32) in im Wesentlichen axialer in Bezug zu einer Achse des Masts (1, 8) zurückgeklappter Position von einer abnehmbaren Verriegelungsvorrichtung gehalten werden, **dadurch gekennzeichnet, dass** die Verriegelungsvorrichtung einen axial mobilen Kranz (10) aufweist, der in axialer Entfernung von dem Tragabschnitt (9) angeordnet ist, um die Arme (30) unter der Verriegelungswirkung radial zu halten, wobei der Kranz (10) durch einen Hystereseeffekt in Verriegelungsposition gehalten wird, bei dem der Kranz (10) durch Entspannen einer gespannten Feder (20), deren eine Ende eine Gegenauflageposition, die axial zu dem Mast (1, 8) stationär ist, einnimmt, erst in einem Rücklauf außerhalb ihrer Wirkung nach einem zusätzlichen Spannen der Feder (20) durch eine externe Kraft, um einen beweglichen Anschlag (21) zum Unterbinden der Wirkung der Feder (20), der von dem Kranz (10) in ungesichertem Rücklaufschutzanschlagsgleichgewicht gehalten wird, freizugeben, angetrieben werden kann.

2. Gondel nach Anspruch 1, bei der der Kranz (10) auf einem entgegen gesetzten Abschnitt (2) des Masts (1, 8) gleitend installiert ist.

3. Gondel nach Anspruch 1, bei der der Kranz (10) auf einem Abschnitt eines gegebenen der Arme (30) gleitend installiert ist.

4. Gondel nach Anspruch 3, bei der die Feder (20) so eingerichtet ist, dass ihre Gegenauflage auf ein seitliches Relief des gegebenen Arms wirkt.

5. Gondel nach einem der Ansprüche 1 bis 4, bei der der Anschlag (21) eingerichtet ist, um eine Gegenauflage auf einem seitlichen Relief eines der Arme (30) zu nehmen.

6. Gondel nach einem der Ansprüche 1 bis 5, bei der Mittel (22) zum Antreiben des Anschlags (20) aus seiner ungesicherten Gleichgewichtsposition heraus vorgesehen sind.

7. Gondel nach Anspruch 6, bei der die Mittel zum Antreiben des Anschlags (21) eine Rückholfeder (22) aufweisen.

8. Gondel nach Anspruch 6, bei der die Mittel zum Antreiben des Anschlags (21) eine an dem Kranz (10) befestigte Verbindung aufweisen.

9. Gondel nach Anspruch 6, bei der die Mittel zum Antreiben des Anschlags (21) eine Rampe des Kranzes (10) mit teilweise radialer Ausdehnung in Bezug zu dem Mast (1, 8) in Eingriff mit einer entgegen gesetzten Rampe des Anschlags (21) aufweisen, um den Anschlag (21) radial aus seiner ungesicherten Gleichgewichtsposition zurückzuschieben, wenn sich der Kranz (10) von dem Anschlag (21) bei dem zusätzlichen Spannen der Feder (20) beabstandet.

10. Gondel nach einem der Ansprüche 1 bis 9, bei der der Kranz (10) ein axiales Relief (15) zum Halten des Anschlags (21) in ungesichertem Gleichgewicht aufweist.

11. Gondel nach einem der Ansprüche 1 bis 10, bei der der Anschlag (21) auf dem Mast (1, 8) beweglich installiert ist.

12. Gondel nach einem der Ansprüche 1 bis 10, bei der der Anschlag (21) auf dem Kranz (10) beweglich installiert ist.

13. Gondel nach einem der Ansprüche 1 bis 12, bei der der Anschlag (21) schwenkend installiert ist.

14. Gondel nach Anspruch 13, bei der der Anschlag (21) elastisch schwenkend um eine Achse installiert ist, die im Wesentlichen zu einer Gleitrichtung des Kranzes (10) parallel ist, um aus der ungesicherten Gleichgewichtsposition in einen Winkelsektor zurückgeholt zu werden, der ihm einen freien axialen Durchgang bietet.

15. Gondel nach einem der Ansprüche 13 und 14, bei der der Anschlag (21) mit einem Element zum Begrenzen des Schwenkens verbunden ist, das die ungesicherte Gleichgewichtsposition definiert.

16. Gondel nach Anspruch 15, bei der der Anschlag (21) einen Weg aufweist, der in der ungesicherten Gleichgewichtsposition den eines anderen Anschlags, der das Begrenzungselement des Schwenkens bildet, schneidet.

17. Gondel nach einem der Ansprüche 1 bis 16, bei der der Anschlag (21) einen Haken aufweist, der eine Anschlaginnenfläche aufweist, die mit einem Rückhalterelief des Kranzes (10) zusammenwirkt.

18. Gondel nach einem der Ansprüche 1 bis 17, bei der der Anschlag (21) eine Nockenform aufweist, die eingerichtet ist, um außerhalb der ungesicherten Gleichgewichtsposition von dem Kranz (10) aus dem Rücklauf dieses getrieben zu werden.

19. Gondel nach einem der Ansprüche 1 bis 18, bei der der Kranz (10) eine bestimmte Masse aufweist, um das zusätzliche Spannen der Feder (20) bei einem Überschreiten eines Bremsschwellenwerts auszuüben.

20. Gondel nach einem der Ansprüche 1 bis 19, bei der der Kranz (10) aus einem Ring (11) besteht, der Haltepratzen der freien Abschnitte (32) der jeweiligen Arme trägt.

21. Gondel nach Anspruch 20, bei der der Mast (1, 8) auf einem Rücklaufabschnitt des Kranzes (10) ein Gewinde trägt, das mit einem Außengewinde dieses zusammenwirkt, um bei einem Rücklauf Eingriffsektoren der Pratzen in Bezug zu stationären Sektoren, die von den freien Abschnitten (32) der Arme (30) belegt sind, winkelig zu versetzen.

22. Gondel nach einem der Ansprüche 1 bis 21, bei der der Kranz (10) eingerichtet ist, um mit einem Sicherheitsmechanismus zusammenwirken, der vorgesehen ist, um ihn in Verriegelungsposition der Arme (30) zu halten.

23. Gondel nach Anspruch 22, bei der der Mast (1, 8) einen nicht kreisförmigen Querschnitt aufweist, der an eine Stange (11) zum axialen Gleiten des Kranzes (10) angepasst ist, um den Kranz (10) winkelig zu positionieren, wobei der Mast (1, 8) an der Position des Kranzes (10), die die Arme (30) verriegelt, einen Abschnitt mit einem Querschnitt aufweist, der nicht angepasst ist, der einen seitlichen umfänglichen Zugang abgrenzt, der für die Stange (11) durch Drehen des Kranzes (10) durch einen Bediener zugänglich ist und zwei axial entgegen gesetzte Ansätze zum Halten des Kranzes (10) in axialer Verriegelungsposition der Arme (30) aufweist.

24. Gondel nach Anspruch 22, bei der der Kranz (10) zu einem Kopf (2) des Masts (1, 8) gehört, der einen Läufer des Sicherheitsmechanismus aufweist, der in einer radialen Ebene des Masts (1, 8) beweglich ist, um mit mindestens einem Ansatz gegenüber dem Kranz (10) zusammenzuwirken, um den Kranz (10) in mindestens eine Gleitrichtung axial zu blockieren.
